# FASCICULE DE BREVET EUROPEEN

(11) **EP 4 046 485 B1**
(45) Date de publication et mention de la délivrance du brevet: **18.12.2024**
(21) Numéro de dépôt: 22156522.9
(22) Date de dépôt: 14.02.2022
(51) Int. Cl.: A01M 7/00

(54) **ENSEMBLE POUR RAMPE DE PULVÉRISATION COMPRENANT UN DISPOSITIF ANTI-FOUETTEMENT**
ANORDNUNG FÜR EIN SPRITZGESTÄNGE MIT EINER VORRICHTUNG ZUM ABMILDERN DES PEITSCHENEFFEKTS
ASSEMBLY FOR SPRAY BOOM COMPRISING AN ANTI-WHIPPING DEVICE

(30) Priorité: 18.02.2021 FR 2101558
(43) Date de publication de la demande: 24.08.2022
(73) Titulaire: Exel Industries, 51200 Epernay (FR)
(72) Inventeur: BERTOUT, Jean-Philippe, 75009 PARIS (FR)
(74) Mandataire: Argyma

(56) Documents cités:
- EP-B1- 1 407 664
- EP-B1- 1 683 414
- FR-A1- 2 816 805

## Description

### DOMAINE TECHNIQUE

L'invention concerne un ensemble pour rampe de pulvérisation, une rampe de pulvérisation pour système de pulvérisation agricole comprenant un tel ensemble, ainsi qu'un système de pulvérisation agricole pour engin agricole comprenant une telle rampe de pulvérisation.

### ÉTAT DE LA TECHNIQUE ANTÉRIEURE

Il est connu de mettre en oeuvre des systèmes de pulvérisation agricole comprenant une rampe de pulvérisation supportant des buses par l'intermédiaire desquelles un liquide de traitement, tel que du produit phytosanitaire ou de l'engrais liquide, est pulvérisé globalement verticalement vers le bas sur des végétaux à traiter d'un champ.

En grande culture, la rampe de pulvérisation comprend un bâti central, ainsi que deux bras principaux qui portent les buses et qui sont chacun montés sur le bâti, d'un côté opposé du bâti suivant une direction transversale à une direction longitudinale orientée d'arrière en avant dans le sens d'avancement du pulvérisateur agricole.

Dans une configuration de pulvérisation, ces bras principaux s'étendent globalement transversalement de chaque côté du bâti. Ils peuvent en outre être prolongés par des bras secondaires portant aussi des buses et s'étendant eux-mêmes transversalement dans cette configuration de pulvérisation. La rampe de pulvérisation peut ainsi présenter une dimension transversale ou envergure allant de 7 à plus de 50m dans cette configuration de pulvérisation.

Une grande surface du champ de végétaux à traiter peut ainsi être pulvérisée par passage de la rampe de pulvérisation, ce qui représente un gain de temps non négligeable pour l'agriculteur.

De telles envergures posent toutefois quelques difficultés.

En particulier, un phénomène de fouettement de la rampe de pulvérisation apparaît en ligne droite lors d'accélérations ou de décélérations brutales du système de pulvérisation agricole, en sortie de virages ou encore sur terrains chaotiques. Ce phénomène de fouettement se traduit par des oscillations notamment des bras principaux par rapport au bâti central. Ce phénomène de fouettement est très néfaste pour la rampe de pulvérisation du point de vue de sa résistance mécanique.

FR 2 816 805 A1 divulgue une rampe de pulvérisation comportant un dispositif anti-vibration, EP 1 683 414 B1 divulgue un dispositif anti-fouettement déposé à l'extérieur d'une connexion entre un bras de la rampe de pulvérisation et le bâti central.

### EXPOSÉ DE L'INVENTION

Afin de pallier cet inconvénient, la présente invention a pour objet un ensemble pour rampe de pulvérisation d'un système de pulvérisation agricole comprenant un premier élément structurel, un deuxième élément structurel, l'un parmi le premier élément structurel et le deuxième élément structurel comprenant un fourreau s'étendant autour d'un premier axe d'extension, l'autre parmi le premier élément structurel et le deuxième élément structurel comprenant un arbre s'étendant suivant un deuxième axe d'extension, l'arbre étant entouré par le fourreau et monté pivotant dans le fourreau autour du deuxième axe d'extension, ainsi qu'un dispositif anti-fouettement conçu pour amortir un fouettement du premier élément structurel et du deuxième élément structurel l'un par rapport à l'autre, le dispositif anti-fouettement étant monté à l'intérieur du fourreau, entre l'arbre et le fourreau.

Selon des variantes de réalisation qui peuvent être prises ensemble ou séparément :
- le dispositif anti-fouettement est conçu pour amortir de manière passive le fouettement du premier élément structurel et du deuxième élément structurel l'un par rapport à l'autre ;
- le dispositif anti-fouettement comprend au moins un plot d'amortissement, le ou chaque plot d'amortissement présentant une forme globalement tubulaire s'étendant autour des premier et deuxième axes d'extension, le ou chaque plot d'amortissement entourant l'arbre et étant lui-même entouré par le fourreau ;
- le dispositif anti-fouettement comprend une rotule montée entre le fourreau et l'arbre, l'arbre étant ainsi articulé à l'intérieur du fourreau ;
- le dispositif anti-fouettement comprend un organe de guidage présentant une forme globalement tubulaire s'étendant autour du deuxième axe d'extension, l'organe de guidage entourant l'arbre et étant lui-même entouré par le fourreau ;
- le dispositif anti-fouettement comprend une rotule montée entre l'organe de guidage et le fourreau, de manière à articuler l'arbre à l'intérieur du fourreau par l'intermédiaire de l'organe de guidage ;
- l'arbre est monté libre en pivotement dans l'organe de guidage autour du deuxième axe d'extension ;
- l'organe de guidage est monté libre en pivotement par rapport au fourreau autour d'un axe de pivotement, agencé perpendiculairement au premier axe d'extension, et solidaire en pivotement par rapport au fourreau autour d'axes perpendiculaires à l'axe de pivotement, l'organe de guidage formant ainsi une noix de cardan ;
- le dispositif anti-fouettement comprend deux sous-ensembles d'amortissement agencés à distance l'un de l'autre suivant le premier axe d'extension, chaque sous-ensemble d'amortissement comprenant au moins un plot d'amortissement, chaque plot d'amortissement présentant une forme globalement tubulaire s'étendant autour des premier et deuxième axes d'extension, chaque plot d'amortissement entourant en outre l'arbre et étant lui-même entouré par le fourreau.

L'invention a encore pour objet une rampe de pulvérisation pour système de pulvérisation agricole comprenant un bâti central, au moins un bras principal monté sur le bâti central et au moins un ensemble tel que précédemment décrit.

Selon des variantes de réalisation qui peuvent être prises ensemble ou séparément :
- la rampe comprend au moins un bras secondaire monté dans le prolongement du ou de l'un des bras principaux, ledit bras principal et un ou plusieurs bras secondaires se succédant depuis le bâti central jusqu'à une extrémité libre de la rampe de pulvérisation ;
- le premier élément structurel d'au moins un ensemble est formé par le bâti central et le deuxième élément structurel de l'au moins un ensemble est formé par le ou l'un des bras principaux ;
- le premier élément structurel d'au moins un ensemble est formé par le ou l'un des bras principaux et le deuxième élément structurel de l'au moins un ensemble est formé par le bras secondaire monté sur ledit bras principal ;
- le premier élément structurel d'au moins un ensemble est formé par l'un des bras secondaire, tandis que le deuxième élément structurel de l'au moins un ensemble est formé par un autre des bras secondaires qui est monté sur l'un des bras secondaires. L'invention concerne aussi un système de pulvérisation agricole (100) pour engin agricole comprenant une rampe de pulvérisation(10) telle que précédemment décrite.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
[Fig.1] est une vue schématique de face d'un système de pulvérisation agricole comprenant une rampe de pulvérisation selon un mode de réalisation de l'invention ;
[Fig.2] est une vue de détail d'une rampe de pulvérisation selon un mode de réalisation ;
[Fig.3] est une vue en coupe de la rampe de pulvérisation illustrée à la figure 2, suivant un plan de coupe globalement longitudinal et vertical ;
[Fig.4] est une vue en coupe d'une rampe de pulvérisation selon un autre mode de réalisation, suivant un plan de coupe globalement longitudinal et vertical ;
[Fig.5] est une vue en coupe d'une rampe de pulvérisation selon un autre mode de réalisation, suivant un plan de coupe globalement longitudinal et vertical ;
[Fig.6] est une vue en coupe d'une rampe de pulvérisation selon un autre mode de réalisation, suivant un plan de coupe globalement longitudinal et vertical.

### DESCRIPTION DETAILLEE

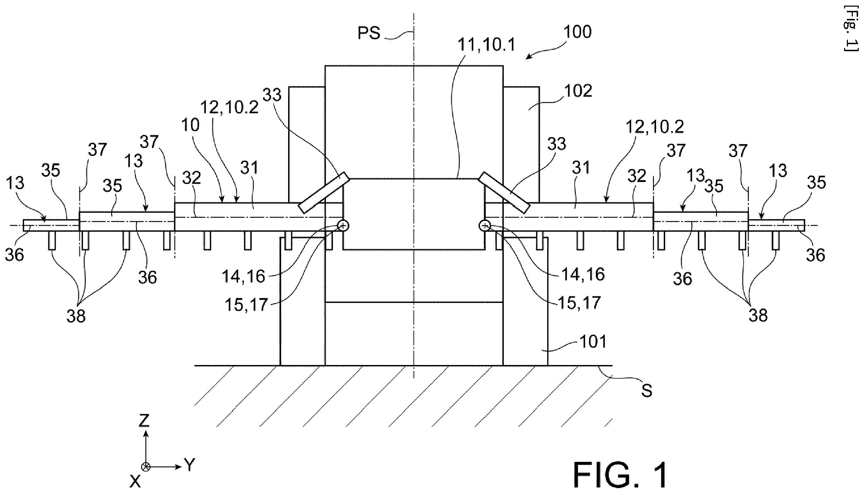

La figure 1 montre un système de pulvérisation agricole 100, notamment pour grande culture, telle que la culture des céréales, comprenant une rampe de pulvérisation 10 destiné à pulvériser un liquide de traitement, tel que du produit phytosanitaire ou de l'engrais liquide, sur des végétaux à traiter d'un champ, selon un mode de réalisation de l'invention.

Le système de pulvérisation 100 est en contact avec un sol du champ de végétaux à traiter, notamment via des roues 101 permettant son déplacement.

Le système de pulvérisation 100 est par exemple automoteur et forme donc en lui-même un engin agricole, tel qu'un tracteur. En variante (non représentée), le système de pulvérisation 100 est destiné à être porté par l'engin agricole. Encore en variante (non représenté), le système de pulvérisation 100 est destiné à être tracté par un engin agricole.

Il est adopté à titre non limitatif un repère orthogonal comprenant une direction longitudinale X vers l'avant dans le sens d'avancement de l'engin agricole, une direction transversale Y vers la gauche et une direction verticale Z vers le haut. Les directions longitudinale et transversale sont horizontales, globalement parallèles au sol du champ de végétaux à traiter.

La rampe de pulvérisation 10 comprend au moins un ensemble comprenant lui-même un premier élément structurel 10.1, un deuxième élément structurel 10.2, ainsi qu'un dispositif anti-fouettement 10.3.

La rampe de pulvérisation 10 peut en outre comprendre un bâti central 11 et au moins un bras principal 12 monté sur le bâti central 11. La rampe de pulvérisation 10 comprend par exemple deux bras principaux 12 chacun monté sur le bâti central 11 d'un côté opposé dudit bâti central 11 suivant la direction transversale Y. La rampe de pulvérisation 10 est réalisée de manière symétrique par rapport à un plan de symétrie PS longitudinal et vertical centré sur le bâti central 11. Aussi, seul l'un des côtés de ce plan de symétrie PS sera décrit ci-après.

La rampe de pulvérisation 10 peut encore comprendre au moins un bras secondaire 13 monté dans le prolongement du bras principal 12, le bras principal 12 et un ou plusieurs bras secondaires 13 se succédant ainsi depuis le bâti central 11 jusqu'à une extrémité libre de la rampe de pulvérisation 10. L'extrémité libre de la rampe de pulvérisation 10 est alors portée par le bras secondaire 13 qui est le dernier depuis le bâti central 11.

Le premier élément structurel 10.1 d'au moins un ensemble est par exemple formé par le bâti central 11, tandis que le deuxième élément structurel 10.2 de l'au moins un ensemble est formé par le bras principal 12.

Le premier élément structurel 10.1 d'au moins un ensemble peut aussi être formé par le bras principal 12, tandis que le deuxième élément structurel 10.2 de l'au moins un ensemble est formé par le bras secondaire 13 monté sur le bras principal 12.

Le premier élément structurel 10.1 d'au moins un ensemble peut encore être formé par l'un des bras secondaire 13, tandis que le deuxième élément structurel 10.2 de l'au moins un ensemble est formé par un autre des bras secondaires 13 qui est monté sur l'un des bras secondaires 13.

Dans la suite de la description, seul un ensemble dans lequel le premier élément structurel 10.1 est formé par le bâti central 11 et le deuxième élément structurel 10.2 est formé par le bras principal 12 sera décrit en détail. Les enseignements qui suivent s'appliquent toutefois mutatis mutandis aux autres ensembles.

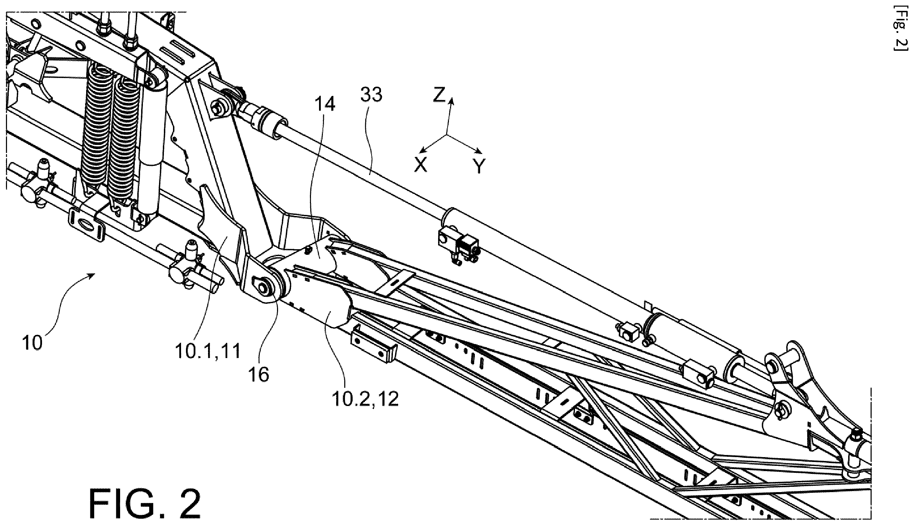

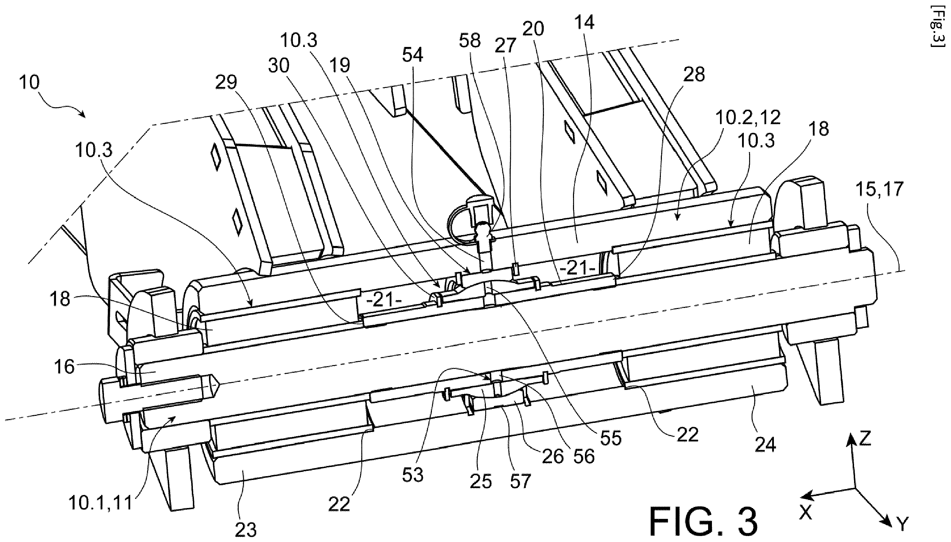

L'un parmi le bâti central 11 et le bras principal 12 comprend un fourreau 14 s'étendant autour d'un premier axe d'extension 15, tandis que l'autre parmi le bâti central 11 et le bras principal 12 comprend un arbre 16 qui s'étend suivant un deuxième axe d'extension 17, qui est entouré par le fourreau 14 et qui est monté pivotant dans le fourreau 14 autour du deuxième axe d'extension 17. Le bâti central 11 et le bras principal 12 sont ainsi montés pivotants l'un par rapport à l'autre autour du deuxième axe d'extension 17. L'arbre 16 traverse par exemple le fourreau 14 de part en part. Sur les figures 2 à 6, sans que cela ne soit limitatif, le fourreau 14 est porté par le bras principal 12, tandis que l'arbre 16 est porté par le bâti central 11. Le dispositif anti-fouettement 10.3 est conçu pour amortir le fouettement du bras principal 12 par rapport au bâti central 11. Il est entendu par « fouettement », des oscillations ou encore un mouvement de va-et-vient du bras principal 12 par rapport au bâti central 11, et donc de l'arbre 16 et du fourreau 14 l'un par rapport à l'autre. L'arbre 16 et le fourreau 14 oscillent autour d'une position de repos dans laquelle l'arbre 16 et le fourreau 14 sont coaxiaux, les premier et deuxième axes d'extension 15, 17 étant confondus. Ces oscillations interviennent par exemple en ligne droite en cas d'accélération ou de freinage brutal du système de pulvérisation agricole 100, en sortie de virage ou encore sur terrain chaotique.

Selon l'invention, le dispositif anti-fouettement 10.3 est en outre monté à l'intérieur du fourreau 14, entre l'arbre 16 et le fourreau 14. Le dispositif anti-fouettement 10.3 est ainsi monté intégralement ou encore en totalité à l'intérieur du fourreau 14. Le dispositif anti-fouettement 10.3 est entouré par le fourreau 14 et entoure l'arbre 16. En d'autres termes, le dispositif anti-fouettement 10.3 est interposé entre l'arbre 16 et le fourreau 14 suivant une première direction radiale, prise par rapport au premier axe d'extension 15. De cette manière, le dispositif anti-fouettement 10.3 est caché à l'intérieur du fourreau 14. Cela permet notamment de limiter l'encombrement de la rampe de pulvérisation 10, de limiter le nombre de pièces nécessaires pour fabriquer la rampe de pulvérisation 10, de réduire la masse de la rampe de pulvérisation 10 et/ou de faciliter la conception d'autres aspects de la rampe de pulvérisation 10, tels que la commande en pivotement du bras principal 12 par rapport au bâti central 11. Cela permet encore d'agir au plus près des efforts mécaniques transmis entre le bras principal 12 et le bâti central 11, et donc de réduire les contraintes mécaniques associées.

Le dispositif anti-fouettement 10.3 est par exemple conçu pour amortir de manière passive le fouettement du bras principal 12 par rapport au bâti central 11. Il est entendu par « de manière passive » que l'amortissement est réalisé sans apport d'énergie extérieure. Il est entendu par « énergie extérieure », toute autre énergie que celle induite ou apportée par le mouvement à amortir, ici le fouettement du bras principal 12 par rapport au bâti central 11. A contrario, un amortissement actif nécessite un apport d'énergie extérieure. Il s'agit par exemple d'énergie électrique, hydraulique ou encore pneumatique dans le cas d'un amortissement réalisé par un ou plusieurs vérins.

De cette manière, le dispositif anti-fouettement 10.3 ne nécessite aucune commande ni aucun pilotage pour amortir le fouettement du bras principal 12 par rapport au bâti central 11, simplifiant ainsi sa conception.

Pour cela, le dispositif anti-fouettement 10.3 comprend par exemple au moins un plot d'amortissement 18 et/ou une rotule 19 et/ou un organe de guidage 20.

Le ou chaque plot d'amortissement 18 présente une forme globalement tubulaire et s'étend autour des premier et deuxième axes d'extension 15, 17. Le ou chaque plot d'amortissement 18 entoure l'arbre 16 et est lui-même entouré par le fourreau 14. Le ou chaque plot d'amortissement 18 est interposé suivant la première direction radiale entre le fourreau 14 et l'arbre 16. L'arbre 16 traverse par exemple le ou chaque plot d'amortissement 18 de part en part.

Le ou chaque plot d'amortissement 18 permet ainsi d'amortir le fouettement ou encore les oscillations de l'arbre 16 et du fourreau 14 l'un par rapport à l'autre.

Le ou chaque plot d'amortissement 18 peut être monté libre en pivotement par rapport au fourreau 14 autour du premier axe d'extension 15, notamment au moyen d'un montage avec jeu. En variante, le ou chaque plot d'amortissement 18 est monté solidaire en pivotement dans le fourreau 14 autour du premier axe d'extension 15, notamment au moyen d'un montage serré.

Le ou chaque plot d'amortissement 18 peut encore être monté libre en pivotement par rapport à l'arbre 16 autour du deuxième axe d'extension 17, notamment au moyen d'un montage avec jeu. En variante, l'arbre 16 est monté solidaire en pivotement dans le ou les plots d'amortissement 18 autour du deuxième axe d'extension 17, notamment au moyen d'un montage serré.

Le dispositif anti-fouettement 10.3 comprend par exemple deux sous-ensembles d'amortissement comprenant chacun au moins un plot d'amortissement 18, les deux sous-ensembles d'amortissement étant agencés à distance ou encore étant écartés l'un de l'autre suivant le premier axe d'extension 15. Les sous-ensembles d'amortissement définissent ainsi un espace libre 21 entre eux deux.

Chaque sous-ensemble d'amortissement comprend par exemple un unique plot d'amortissement 18 ou deux ou plus plots d'amortissement 18 montés l'un à la suite de l'autre ou encore dans le prolongement l'un de l'autre suivant le premier axe d'extension 15.

Chaque sous-ensemble d'amortissement peut être logé dans un épaulement 22 ménagé à chaque extrémité 23, 24 du fourreau 14 suivant le premier axe d'extension 15. Chaque épaulement 22 présente par exemple une surface de butée qui est agencée sensiblement perpendiculairement au premier axe d'extension 15, qui est orientée dans un sens opposé à l'autre épaulement 22, et contre laquelle le ou l'un des plots d'amortissement 18 de l'un des sous-ensembles d'amortissement est agencé. Les surfaces de butée des épaulements 22 permettent de maintenir les deux sous-ensembles d'amortissement à distance l'un de l'autre et donc de préserver l'espace libre 21. Les épaulements 22 peuvent être remplacés par des circlips qui sont logés dans des gorges ménagées à chaque extrémité 23, 24 du fourreau 14 et qui présentent les surfaces de butée.

Le ou chaque plot d'amortissement 18 comprend par exemple une cage intérieure tubulaire en métal s'étendant autour du deuxième axe d'extension 17 et entourant l'arbre 16, une cage extérieure tubulaire en métal qui s'étend autour du premier axe d'extension 15, qui entoure la cage intérieure et qui est entourée par le fourreau 14, ainsi qu'un tube en matériau élastomère interposé entre la cage intérieure et la cage extérieure et monté solidaire entre lesdites cages intérieure et extérieure. Les cages intérieure et extérieure sont par exemple réalisées à partir d'acier. Le tube en matériau élastomère est par exemple réalisé à partir de caoutchouc vulcanisé.

En variante, le ou chaque plot d'amortissement 18 peut ne comprendre qu'un tube en matériau élastomère, tel que du polyuréthane, s'étendant autour des premier et deuxième axes d'extension 15, 17.

Le ou l'un au moins des plots d'amortissement 18 peut encore comprendre des gorges, des rainures, des encoches et/ou des évidements ou alvéoles ménagés dans le tube en matériau élastomère, de manière à favoriser le déplacement du fourreau 14 et de l'arbre 16 l'un par rapport à l'autre suivant la ou les directions prises radialement par rapport au deuxième axe d'extension 17 et présentant de tels gorges, rainures, encoches, évidements ou alvéoles. Cela permet ainsi d'obtenir un amortissement différencié en fonction de la direction suivant laquelle ledit plot d'amortissement 18 est sollicité par le fourreau 14 et l'arbre 16.

Lorsque chaque sous-ensemble d'amortissement comprend plusieurs plots d'amortissement 18, les plots d'amortissement 18 au sein de chaque sous-ensemble d'amortissement peuvent présenter des propriétés d'amortissement différentes. Pour cela, les tubes en matériau élastomère desdits plots d'amortissement 18 peuvent par exemple présenter une dureté différente et/ou être chargés de fibres et/ou présenter des évidements ou alvéoles.

La rotule 19 est montée entre le fourreau 14 et l'arbre 16. L'arbre 16 et le fourreau 14 sont ainsi articulés l'un par rapport l'autre. La rotule 19 autorise non seulement le pivotement de l'arbre 16 et du fourreau 14 l'un par rapport à l'autre autour du deuxième axe d'extension 17, mais aussi autour d'axes qui sont perpendiculaires au deuxième axe d'extension 17. La rotule 19 accompagne ainsi les oscillations de l'arbre 16 et du fourreau 14 l'un par rapport à l'autre, ces oscillations étant, le cas échéant, amorties par le ou les plots d'amortissement 18. La rotule 19 permet aussi une reprise des efforts entre le bras principal 12 et le bâti central 11. Elle évite l'effondrement structurel de la rampe de pulvérisation 10, mais aussi l'écrasement continu du ou des plots d'amortissement 18.

La rotule 19 entoure l'arbre 16 et est elle-même entouré par le fourreau 14. La rotule 19 est interposée entre le fourreau 14 et l'arbre 16 suivant la première direction radiale.

La rotule 19 comprend par exemple une noix 25 traversée par l'arbre 16 et logée dans une cage 26 qui est montée dans le fourreau 14.

L'arbre 16 est par exemple monté libre en pivotement dans la noix 25 de la rotule 19 autour du deuxième axe d'extension 17, notamment au moyen d'un montage avec jeu. La cage 26 de la rotule 19 peut être montée libre en pivotement dans le fourreau 14 autour du premier axe d'extension 15, notamment au moyen d'un montage avec jeu.

La cage 26 de la rotule 19 peut encore être bloquée en translation dans le fourreau 14 suivant le premier axe d'extension 15 au moyen de premiers organes de blocage en translation, tel que des premiers circlips 27 logés dans des gorges ménagées dans le fourreau 14, de chaque côté de la cage 26 suivant le premier axe d'extension 15.

La rotule 19 est par exemple agencée dans l'espace libre 21, entre les deux sous-ensembles d'amortissement.

L'organe de guidage 20 présente une forme globalement tubulaire s'étendant autour du deuxième axe d'extension 17. L'organe de guidage 20 entoure en outre l'arbre 16, avec lequel il est donc coaxial, et est lui-même entouré par le fourreau 14. L'organe de guidage 20 est ainsi interposé entre le fourreau 14 et l'arbre 16 suivant la première direction radiale. L'arbre 16 traverse par exemple l'organe de guidage 20 de part en part.

L'arbre 16 est par exemple monté libre en pivotement dans l'organe de guidage 20 autour du deuxième axe d'extension 17, notamment au moyen d'un montage avec jeu.

L'organe de guidage 20 est par exemple agencé dans l'espace libre 21, entre les deux sous-ensembles d'amortissement. Des plots d'amortissement 18 des deux sous-ensembles d'amortissement peuvent enserrer l'organe de guidage 20 suivant le premier axe d'extension 15. Chaque extrémité 28, 29 de l'organe de guidage 20 suivant le premier axe d'extension 15 est ainsi en contact avec le ou l'un des plots d'amortissement 18 des deux sous-ensembles d'amortissement suivant le premier axe d'extension 15.

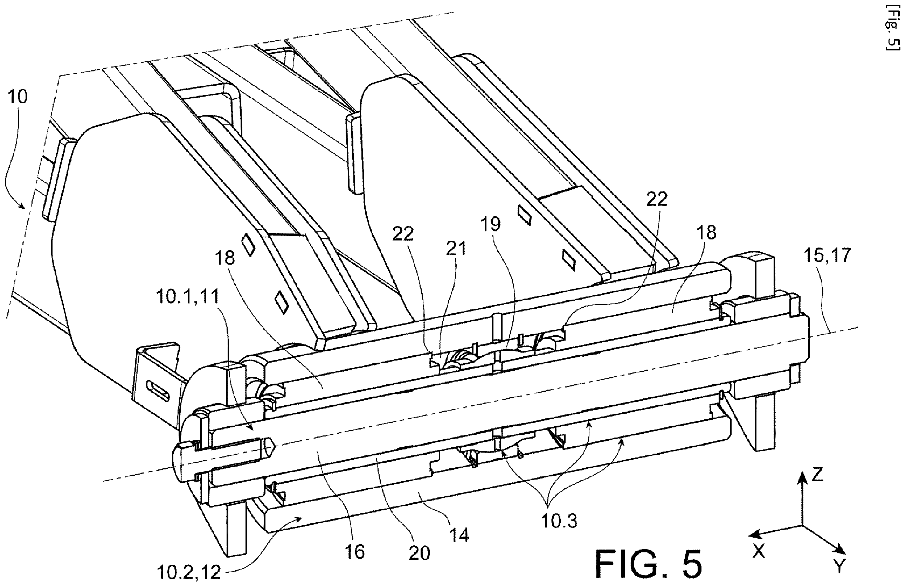

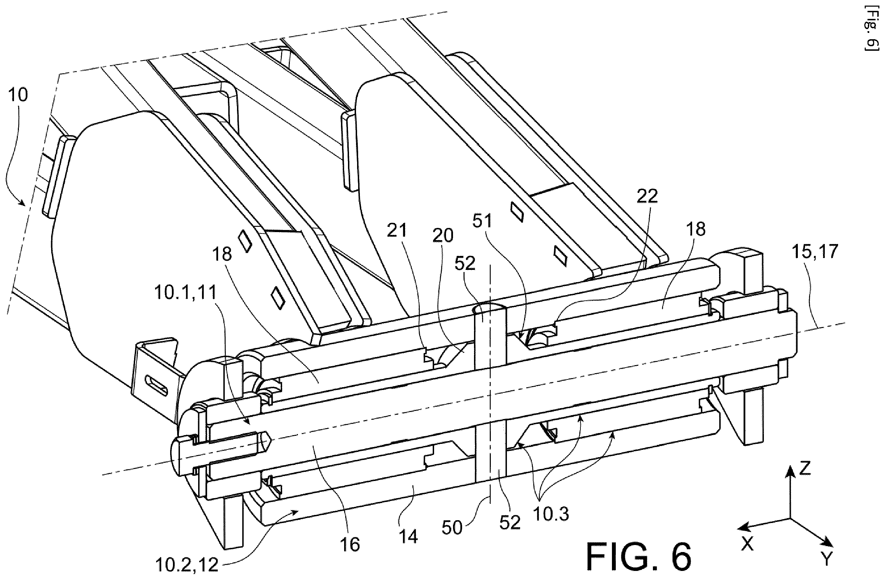

En variante (figures 5 et 6), l'organe de guidage 20 traverse l'un au moins des plots d'amortissement 18. L'organe de guidage 20 est ainsi entouré par le ou les plots d'amortissement 18 qu'il traverse, s'interposant entre ledit ou lesdits plots d'amortissement 18 et l'arbre 16.

Le ou chaque plot d'amortissement 18 que l'organe de guidage 20 traverse peut être monté libre en pivotement par rapport à l'organe de guidage 20 autour du deuxième axe d'extension 17, notamment au moyen d'un montage avec jeu.

En variante, l'organe de guidage 20 est monté solidaire en pivotement dans le ou les plots d'amortissement 18 qu'il traverse autour du deuxième axe d'extension 17, notamment au moyen d'un montage serré.

La rotule 19 est par exemple montée entre le fourreau 14 et l'arbre 16 par l'intermédiaire de l'organe de guidage 20, de manière à articuler l'un par rapport à l'autre, l'arbre 16 et le fourreau 14, par l'intermédiaire de l'organe de guidage 20. La rotule 19 accompagne ainsi les oscillations de l'arbre 16 et du fourreau 14 l'un par rapport à l'autre, par l'intermédiaire de l'organe de guidage 20. La rotule 19 entoure donc l'organe de guidage 20, qui entoure lui-même l'arbre 16. La rotule 19 est ainsi interposée entre le fourreau 14 et l'organe de guidage 20 suivant la première direction radiale.

Pour cela, la noix 25 de la rotule 19 est par exemple traversée par l'organe de guidage 20. L'organe de guidage 20 dépasse notamment de chaque côté de la noix 25 de la rotule 19 suivant le deuxième axe d'extension 17.

L'organe de guidage 20 peut en outre être monté libre en pivotement dans la noix 25 de la rotule 19 autour du deuxième axe d'extension 17, notamment au moyen d'un montage avec jeu.

L'organe de guidage 20 est par exemple bloqué en translation par rapport à la rotule 19 suivant le deuxième axe d'extension 17 au moyen de deuxièmes organes de blocage en translation, tels que des deuxièmes circlips 30 logés dans des gorges ménagées dans l'organe de guidage 20, en regard et de chaque côté de la noix 25 de la rotule 19 suivant le deuxième axe d'extension 17. Ce blocage en translation de l'organe de guidage 20 permet de reprendre des efforts axiaux, mais aussi d'éviter toute déformation du ou des plots d'amortissement 18 en cas de coulissement de l'arbre 16 suivant le deuxième axe d'extension 17.

L'organe de guidage 20 permet notamment de faciliter le montage de l'arbre 16 à travers la rotule 19, notamment en imposant un débattement angulaire au pivotement de la noix 25 de rotule 19 autour des axes perpendiculaires au deuxième axe d'extension 17, ce débattement angulaire empêchant la noix 25 de pivoter de telle sorte qu'elle ne puisse plus être traversée par l'arbre 16.

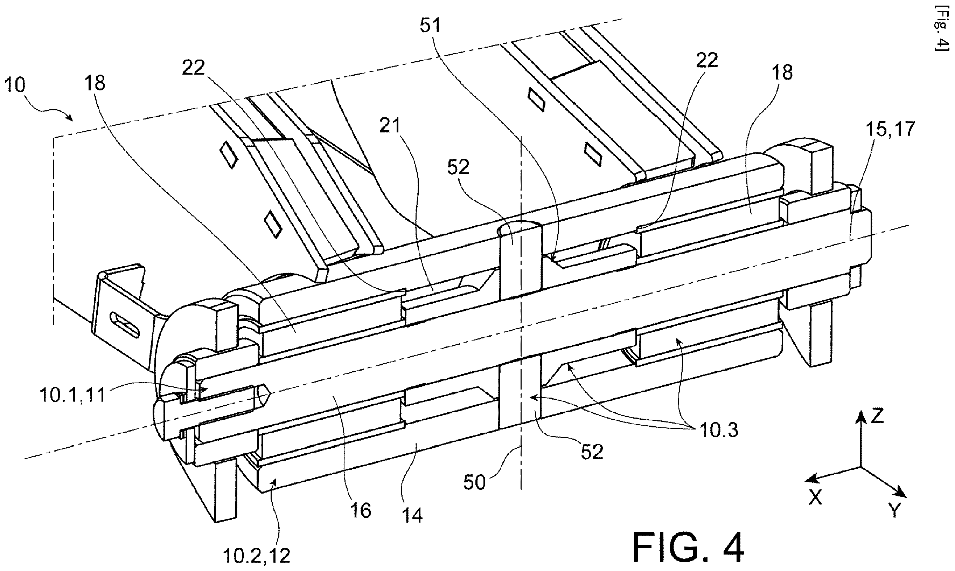

En remplacement de la rotule 19, l'organe de guidage 20 est par exemple monté libre en pivotement par rapport au fourreau 14 autour d'un axe de pivotement 50, agencé perpendiculairement au premier axe d'extension 15, et solidaire en pivotement par rapport au fourreau 14 autour d'axes perpendiculaires à l'axe de pivotement 50. L'organe de guidage 20 forme alors une noix de cardan 51 (figures 4 et 6). L'organe de guidage 20 autorise non seulement le pivotement de l'arbre 16 et du fourreau 14 l'un par rapport à l'autre autour du deuxième axe d'extension 17, mais aussi autour de l'axe de pivotement 50. L'organe de guidage 20 accompagne ainsi les oscillations de l'arbre 16 et du fourreau 14 l'un par rapport à l'autre, ces oscillations étant, le cas échéant, amorties par le ou les plots d'amortissement 18. L'organe de guidage 20 permet aussi une reprise des efforts entre le bras principal 12 et le bâti central 11. Elle évite l'effondrement structurel de la rampe de pulvérisation 10, mais aussi l'écrasement continu du ou des plots d'amortissement 18.

Pour cela, une tige 52 traverse par exemple le fourreau 14 et l'organe de guidage 20 suivant l'axe de pivotement 50, de chaque côté de l'arbre 16.

Un circuit de graissage 53 est par exemple encore prévu, de manière à assurer le pivotement du fourreau 14 et de l'arbre 16 l'un par rapport à l'autre, et le cas échéant, du ou des plots d'amortissement 18 et/ou de la rotule 19 et/ou de l'organe de guidage 20. Le circuit de graissage 53 permet d'éviter les problèmes de grippage.

Le circuit de graissage 53 comprend par exemple un premier canal 54 traversant de part en part le fourreau 14 globalement suivant la première direction radiale jusqu'à la rotule 19, notamment la cage 26 de la rotule 19, un ou plusieurs deuxièmes canaux 55 traversant de part en part la rotule 19, notamment la noix 25 de la rotule 19, globalement suivant la première direction radiale, ainsi que, le cas échéant, un ou plusieurs troisièmes canaux 56 traversant de part en part l'organe de guidage 20 globalement suivant la première direction radiale. La cage 26 de la rotule 19 peut encore être pourvue d'une gorge 57 agencée autour du premier axe d'extension 15 et ménagée en regard du premier canal 54. Un graisseur hydraulique 58, notamment surmonté d'un capuchon, peut aussi être monté dans le premier canal 54.

En variante, le circuit de graissage comprend un canal traversant de part en part l'arbre 16 depuis un premier tronçon s'étendant suivant le deuxième axe d'extension 17 jusqu'à un ou plusieurs deuxièmes tronçons s'étendant depuis le premier tronçon globalement suivant une deuxième direction radiale, prise par rapport au deuxième axe d'extension 17. Un graisseur hydraulique peut aussi être monté dans le premier tronçon du canal.

Le bras principal 12 peut comprendre un corps 31 allongé s'étendant suivant un axe principal d'extension 32.

La rampe de pulvérisation 10 est par exemple conçue pour occuper une configuration de pulvérisation dans laquelle l'axe principal d'extension 32 du corps 31 du bras principal 12 est orienté globalement transversalement (figure 1) et une configuration de repos dans laquelle l'axe principal d'extension 32 du corps 31 du bras principal 12 est compris dans un plan globalement longitudinal et vertical. En variante, dans la configuration de repos, l'axe principal d'extension 32 du corps 31 du bras principal 12 est compris dans un plan globalement transversal et vertical.

La rampe de pulvérisation 10 occupe par exemple la configuration de pulvérisation, lorsque le système de pulvérisation agricole 100 parcourt le champ de végétaux à traiter pour les pulvériser de liquide de traitement. La rampe de pulvérisation 10 occupe par exemple la configuration de repos pendant le roulage du système de pulvérisation agricole 100 sur la route, l'encombrement transversal du système de pulvérisation agricole 100 étant alors réduit.

Le premier axe d'extension 15 est par exemple orienté globalement longitudinalement, lorsque la rampe de pulvérisation 10 occupe la configuration de pulvérisation. En variante (non représentée), le premier axe d'extension 15 est orienté globalement verticalement, lorsque la rampe de pulvérisation 10 occupe la configuration de pulvérisation. Dans la configuration de repos, le premier axe d'extension 15 peut ou non avoir la même orientation que dans la configuration de pulvérisation. Il est entendu par « globalement longitudinalement » ou « globalement verticalement » que le premier axe d'extension 15 est orienté longitudinalement ou verticalement à 10° près.

L'axe de pivotement 50 est par exemple orienté globalement verticalement, lorsque la rampe de pulvérisation 10 occupe la configuration de pulvérisation. En variante (non représentée), l'axe de pivotement 50 est orienté globalement horizontalement, lorsque la rampe de pulvérisation 10 occupe la configuration de pulvérisation. Dans la configuration de repos, l'axe de pivotement 50 peut ou non avoir la même orientation que dans la configuration de pulvérisation. Il est entendu par « globalement verticalement » ou« globalement longitudinalement » l'axe de pivotement 50 est orienté longitudinalement ou verticalement à 10° près.

Le changement de configuration de la rampe de pulvérisation 10 entre ses configurations de pulvérisation et de repos est par exemple réalisé par pivotement du bras principal 12 par rapport au bâti central 11 autour du premier axe d'extension 15. En variante (non représentée), ce changement de configuration est réalisé d'une part par pivotement du bras principal 12 par rapport au bâti central 11 autour du premier axe d'extension 15, et d'autre part, par pivotement d'une pièce mobile du bâti central 11 portant le fourreau 14, par rapport à une pièce fixe du bâti central 11, autour d'un axe de pivotement, qui n'est ni parallèle ni confondu avec le premier axe d'extension 15.

Un ou plusieurs vérins 33 peuvent encore être conçus pour entraîner le bras principal 12 en pivotement par rapport au bâti central 11 autour du premier axe d'extension 15 et/ou la pièce mobile en pivotement par rapport à la pièce fixe du bâti central 11 autour de l'axe de pivotement.

Le ou chaque bras secondaire 13 peut comprendre un corps 35 allongé s'étendant suivant un axe principal d'extension 36.

Le ou chaque bras secondaire 13 est par exemple monté pivotant sur le bras principal 12 ou secondaire 13 qui le précède par rapport bâti central 11 autour d'un axe de pivotement 37, globalement perpendiculaire au premier axe d'extension 15. Lorsque le premier élément structurel 10.1 d'un ensemble est formé par le bras principal 12 ou l'un des bras secondaires 13 et que le deuxième élément structurel 10.2 de cet ensemble est formé par le bras secondaire 13 monté sur le bras principal 12 ou un autre des bras secondaires 13 monté sur l'un des bras secondaires 13, l'axe de pivotement 37 est confondu avec le deuxième axe d'extension 17.

Chaque bras secondaire 13 peut en outre être conçu pour pivoter par rapport au bras principal 12 ou secondaire 13 qui le précède, autour de l'axe de pivotement 37, entre une position dépliée dans laquelle le corps 35 dudit bras secondaire 13 et le corps 31, 35 du bras principal 12 ou secondaire 13 qui le précède sont globalement alignés (figure 1) l'un avec l'autre, notamment suivant la direction transversale Y en configuration de pulvérisation de la rampe de pulvérisation 10, et une position repliée dans laquelle le corps 35 dudit bras secondaire 13 est superposé sur le corps 31, 35 du bras principal 12 ou secondaire 13 qui le précède.

Les positions dépliée et repliée permettent de faire varier une dimension transversale ou encore envergure de la rampe de pulvérisation 10, lorsque le bras principal 12 occupe sa position de pulvérisation, notamment en fonction des dimensions du champ de végétaux à traiter. La position repliée permet en outre de réduire l'encombrement de la rampe de pulvérisation 10, lorsque le bras principal 12 occupe sa position de repos.

Un ou plusieurs vérins (non représentés) peuvent encore être conçus pour entraîner en pivotement le ou chaque bras secondaires 13 autour de leur axe de pivotement 37 entre les positions dépliée et repliée.

Le bras principal 12 et, le cas échéant, le ou les bras secondaires 13 supportent par exemple une pluralité de buses 38 conçues pour pulvériser du liquide de traitement sur les végétaux à traiter du champ. Les buses 38 sont orientées globalement verticalement vers le bas.

Les buses 38 sont en outre alimentés en liquide de pulvérisation par une ou plusieurs conduites d'alimentation (non représentées) qui peuvent elles-mêmes être supportées par le bras principal 12 et, le cas échéant, le ou les bras secondaires 13. La ou les conduites d'alimentation sont en outre reliées à un circuit d'alimentation (non représenté) prélevant du liquide de traitement à une cuve 102 supportée par le système de pulvérisation agricole 100.

La rampe de pulvérisation 10 décrite ci-dessus est particulièrement avantageuse car elle met en oeuvre un dispositif anti-fouettement 10.3 peu encombrant et de conception simple.

## Revendications

1. Ensemble pour rampe de pulvérisation (10) d'un système de pulvérisation agricole (100) comprenant :
- un premier élément structurel (10.1),
- un deuxième élément structurel (10.2), l'un parmi le premier élément structurel (10.1) et le deuxième élément structurel (10.2) comprenant un fourreau (14) s'étendant autour d'un premier axe d'extension (15), l'autre parmi le premier élément structurel (10.1) et le deuxième élément structurel (10.2) comprenant un arbre (16) s'étendant suivant un deuxième axe d'extension (17), l'arbre (16) étant entouré par le fourreau (14) et monté pivotant dans le fourreau (14) autour du deuxième axe d'extension (17), l'ensemble étant **caractérisé en ce qu'**il comprend
- un dispositif anti-fouettement (10.3) conçu pour amortir un fouettement du premier élément structurel (10.1) et du deuxième élément structurel (10.2) l'un par rapport à l'autre, le dispositif anti-fouettement (10.3) étant monté à l'intérieur du fourreau (14), entre l'arbre (16) et le fourreau (14).

2. Ensemble selon la revendication 1, dans lequel le dispositif anti-fouettement (10.3) est conçu pour amortir de manière passive le fouettement du premier élément structurel (10.1) et du deuxième élément structurel (10.2) l'un par rapport à l'autre.

3. Ensemble selon la revendication 1 ou la revendication 2, dans lequel le dispositif anti-fouettement (10.3) comprend au moins un plot d'amortissement (18), le ou chaque plot d'amortissement (18) présentant une forme globalement tubulaire s'étendant autour des premier et deuxième axes d'extension (15, 17), le ou chaque plot d'amortissement (18) entourant l'arbre (16) et étant lui-même entouré par le fourreau (14).

4. Ensemble selon l'une des revendications 1 à 3, dans lequel le dispositif anti-fouettement (10.3) comprend une rotule (19) montée entre le fourreau (14) et l'arbre (16), l'arbre (16) étant ainsi articulé à l'intérieur du fourreau (14).

5. Ensemble selon l'une des revendications 1 à 3, dans lequel le dispositif anti-fouettement (10.3) comprend un organe de guidage (20) présentant une forme globalement tubulaire s'étendant autour du deuxième axe d'extension (17), l'organe de guidage (20) entourant l'arbre (16) et étant lui-même entouré par le fourreau (14).

6. Ensemble selon la revendication 5, dans lequel le dispositif anti-fouettement (10.3) comprend une rotule (19) montée entre l'organe de guidage (20) et le fourreau (14), de manière à articuler l'arbre (16) à l'intérieur du fourreau (14) par l'intermédiaire de l'organe de guidage (20).

7. Ensemble selon la revendication 5, dans lequel l'arbre (16) est monté libre en pivotement dans l'organe de guidage (20) autour du deuxième axe d'extension (17) et dans lequel l'organe de guidage (20) est monté libre en pivotement par rapport au fourreau (14) autour d'un axe de pivotement (50), agencé perpendiculairement au premier axe d'extension (15), et solidaire en pivotement par rapport au fourreau (14) autour d'axes perpendiculaires à l'axe de pivotement (50), l'organe de guidage (20) formant ainsi une noix de cardan (51).

8. Ensemble selon l'une des revendications 1 à 7, dans lequel le dispositif anti-fouettement (10.3) comprend deux sous-ensembles d'amortissement agencés à distance l'un de l'autre suivant le premier axe d'extension (15), chaque sous-ensemble d'amortissement comprenant au moins un plot d'amortissement (18), chaque plot d'amortissement (18) présentant une forme globalement tubulaire s'étendant autour des premier et deuxième axes d'extension (15, 17), chaque plot d'amortissement (18) entourant en outre l'arbre (16) et étant lui-même entouré par le fourreau (14).

9. Rampe de pulvérisation (10) pour système de pulvérisation agricole (100) comprenant un bâti central (11), au moins un bras principal (12) monté sur le bâti central (11) et au moins un ensemble selon l'une des revendications 1 à 8.

10. Rampe de pulvérisation (10) selon la revendication 9, comprenant en outre au moins un bras secondaire (13) monté dans le prolongement du ou de l'un des bras principaux (12), ledit bras principal (12) et un ou plusieurs bras secondaires (13) se succédant depuis le bâti central (11) jusqu'à une extrémité libre de la rampe de pulvérisation (10).

11. Rampe de pulvérisation (10) selon la revendication 9 ou la revendication 10, dans laquelle :
- le premier élément structurel (10.1) d'au moins un ensemble est formé par le bâti central (11) et le deuxième élément structurel (10.2) de l'au moins un ensemble est formé par le ou l'un des bras principaux (12) ;
et/ou
- le premier élément structurel (10.1) d'au moins un ensemble est formé par le ou l'un des bras principaux (12) et le deuxième élément structurel (10.2) de l'au moins un ensemble est formé par le bras secondaire (13) monté sur ledit bras principal (12) ; et/ou
le premier élément structurel (10.1) d'au moins un ensemble est formé par l'un des bras secondaire (13), tandis que le deuxième élément structurel (10.2) de l'au moins un ensemble est formé par un autre des bras secondaires (13) qui est monté sur l'un des bras secondaires (13).

12. Système de pulvérisation agricole (100) pour engin agricole comprenant une rampe de pulvérisation (10) selon l'une des revendications 9 à 11.

## Patentansprüche

1. Spritzgestängeanordnung (10) einer landwirtschaftlichen Spritzanlage (100), umfassend:
- ein erstes Strukturelement (10.1),
- ein zweites Strukturelement (10.2),
wobei eines von dem ersten Strukturelement (10.1) und dem zweiten Strukturelement (10.2) eine Hülse (14) umfasst, die sich um eine erste Erstreckungsachse (15) erstreckt, das andere von dem ersten Strukturelement (10.1) und dem zweiten Strukturelement (10.2) eine Welle (16) umfasst, die sich entlang einer zweiten Erstreckungsachse (17) erstreckt, wobei die Welle (16) durch die Hülse (14) umgeben und in der Hülse (14) um die zweite Erstreckungsachse (17) schwenkbar montiert ist,
wobei die Anordnung **dadurch gekennzeichnet ist, dass** sie umfasst:
- eine Schlagschutzvorrichtung (10.3), die ausgelegt ist, ein Schlagen des ersten Strukturelements (10.1) und des zweiten Strukturelements (10.2) relativ zueinander zu dämpfen,
wobei die Schlagschutzvorrichtung (10.3) innerhalb der Hülse (14) zwischen der Welle (16) und der Hülse (14) montiert ist.

2. Anordnung nach Anspruch 1, wobei die Schlagschutzvorrichtung (10.3) ausgelegt ist, das Schlagen des ersten Strukturelements (10.1) und des zweiten Strukturelements (10.2) relativ zueinander passiv zu dämpfen.

3. Anordnung nach Anspruch 1 oder 2, wobei die Schlagschutzvorrichtung (10.3) mindestens einen Dämpfungsblock (18) umfasst, wobei der oder jeder Dämpfungsblock (18) eine im Allgemeinen rohrförmige Form aufweist, die sich um die erste und die zweite Erstreckungsachse (15,17) erstreckt, wobei der oder jeder Dämpfungsblock (18) die Welle (16) umgibt und selbst durch die Hülse (14) umgeben ist.

4. Anordnung nach einem der Ansprüche 1 bis 3, wobei die Schlagschutzvorrichtung (10.3) ein Kugelgelenk (19) umfasst, das zwischen der Hülse (14) und der Welle (16) montiert ist, wobei die Welle (16) somit im Inneren der Hülse (14) gelenkig gelagert ist.

5. Anordnung nach einem der Ansprüche 1 bis 3, wobei die Schlagschutzvorrichtung (10.3) ein Führungselement (20) umfasst, das eine im Allgemeinen rohrförmige Form aufweist, das sich um die zweite Erstreckungsachse (17) erstreckt, wobei das Führungselement (20) die Welle (16) umgibt und selbst durch die Hülse (14) umgeben ist.

6. Anordnung nach Anspruch 5, wobei die Schlagschutzvorrichtung (10.3) ein Kugelgelenk (19) umfasst, das zwischen dem Führungselement (20) und der Hülse (14) montiert ist, um die Welle (16) im Inneren der Hülse (14) über das Führungselement (20) gelenkig zu lagern.

7. Anordnung nach Anspruch 5, wobei die Welle (16) in dem Führungselement (20) um die zweite Verlängerungsachse (17) frei schwenkbar montiert ist und wobei das Führungselement (20) relativ zu der Hülse (14) um eine Schwenkachse (50) frei schwenkbar montiert ist, die senkrecht zu der ersten Erstreckungsachse (15) angeordnet ist, und relativ zu der Hülse (14) um senkrechte Achsen zu der Schwenkachse (50) schwenkfest ist, wobei das Führungselement (20) somit eine Kardangelenkwelle (51) ausbildet.

8. Anordnung nach einem der Ansprüche 1 bis 7, wobei die Schlagschutzvorrichtung (10.3) zwei Dämpfungsuntereinheiten umfasst, die entlang der ersten Erstreckungsachse (15) in einem Abstand voneinander angeordnet sind, wobei jede Dämpfungsuntereinheit mindestens einen Dämpfungsblock (18) umfasst, wobei jeder Dämpfungsblock (18) eine generell rohrförmige Form aufweist, die sich um die erste und die zweite Erstreckungsachse (15, 17) erstreckt, wobei jeder Dämpfungsblock (18) ferner die Welle (16) umgibt und selbst durch die Hülse (14) umgeben ist.

9. Spritzgestänge (10) für eine landwirtschaftliches Spritzanlage (100), umfassend einen zentralen Rahmen (11), mindestens einen an dem zentralen Rahmen (11) montierten Hauptarm (12) und mindestens eine Anordnung nach einem der Ansprüche 1 bis 8.

10. Spritzgestänge (10) nach Anspruch 9, ferner umfassend mindestens einen sekundären Arm (13), der in der Verlängerung des oder des einen der Hauptarme (12) montiert ist, wobei der Hauptarm (12) und ein oder mehrere sekundäre Arme (13) von dem zentralen Rahmen (11) bis zu einem freien Ende des Spritzgestänges (10) aufeinander folgen.

11. Spritzgestänge (10) nach Anspruch 9 oder 10, wobei:
- das erste Strukturelement (10.1) der mindestens einen Anordnung durch den zentralen Rahmen (11) ausgebildet wird und das zweite Strukturelement (10.2) der mindestens einen Anordnung durch den oder den einen der Hauptarme (12) ausgebildet wird;
und/oder
- das erste Strukturelement (10.1) mindestens einer Anordnung durch den oder den einen der Hauptarme (12) ausgebildet wird und das zweite Strukturelement (10.2) der mindestens einen Anordnung durch den sekundären Arm (13) ausgebildet wird, der an dem Hauptarm (12) montiert ist;
und/oder
das erste Strukturelement (10.1) mindestens einer Anordnung durch einen der sekundären Arme (13) ausgebildet wird, während das zweite Strukturelement (10.2) der mindestens einen Anordnung durch einen anderen der sekundären Arme (13) ausgebildet wird, der an einem der sekundären Arme (13) montiert ist.

12. Landwirtschaftliche Spritzanlage (100) für eine landwirtschaftliche Maschine, umfassend ein Sprühgestänge (10) nach einem der Ansprüche 9 bis 11.

## Claims

1. Assembly for spray boom (10) of an agricultural spraying system (100) comprising:
- a first structural element (10.1),
- a second structural element (10.2),
one among the first structural element (10.1) and the second structural element (10.2) comprising a sheath (14) extending about a first extension axis (15), the other among the first structural element (10.1) and the second structural element (10.2) comprising a shaft (16) extending along a second extension axis (17), the shaft (16) being surrounded by the sheath (14) and pivotably mounted in the sheath (14) about the second extension axis (17),
- an anti-whipping device (10.3) designed to cushion a whipping of the first structural element (10.1) and of the second structural element (10.2) with respect to one another, the assembly being **characterized in that** the anti-whipping device (10.3) is mounted inside the sheath (14), between the shaft (16) and the sheath (14).

2. Assembly according to claim 1, wherein the anti-whipping device (10.3) is designed to passively cushion the whipping of the first structural element (10.1) and of the second structural element (10.2) with respect to one another.

3. Assembly according to claim 1 or claim 2, wherein the anti-whipping device (10.3) comprises at least one cushioning stud (18), the or each cushioning stud (18) having a globally tubular shape extending about the first and second extension axes (15, 17), the or each cushioning stud (18) surrounding the shaft (16) and being itself surrounded by the sheath (14).

4. Assembly according to one of claims 1 to 3, wherein the anti-whipping device (10.3) comprises a ball-joint (19) mounted between the sheath (14) and the shaft (16), the shaft (16) thus being articulated inside the sheath (14).

5. Assembly according to one of claims 1 to 3, wherein the anti-whipping device (10.3) comprises a guide member (20) having a globally tubular shape extending about the second extension axis (17), the guide member (20) surrounding the shaft (16) and being itself surrounded by the sheath (14).

6. Assembly according to claim 5, wherein the anti-whipping device (10.3) comprises a ball-joint (19) mounted between the guide member (20) and the sheath (14), in such a way as to articulate the shaft (16) inside the sheath (14) via the guide member (20).

7. Assembly according to claim 5, wherein the shaft (16) is mounted free to pivot in the guide member (20) about the second extension axis (17) and wherein the guide member (20) is mounted free to pivot with respect to the sheath (14) about a pivot axis (50), arranged perpendicularly to the first extension axis (15), and integral in pivoting with respect to the sheath (14) about axes perpendicular to the pivot axis (50), the guide member (20) thus forming a yoke (51).

8. Assembly according to one of claims 1 to 7, wherein the anti-whipping device (10.3) comprises two cushioning sub-assemblies arranged at a distance from one another along the first extension axis (15), each cushioning sub-assembly comprising at least one cushioning stud (18), each cushioning stud (18) having a globally tubular shape extending about the first and second extension axes (15, 17), each cushioning stud (18) further surrounding the shaft (16) and being itself surrounded by the sheath (14).

9. Spray boom (10) for an agricultural spraying system (100) comprising a central frame (11), at least one main arm (12) mounted on the central frame (11) and at least one assembly according to one of claims 1 to 8.

10. Spray boom (10) according to claim 9, further comprising at least one secondary arm (13) mounted in the extension of the or of one of the main arms (12), said main arm (12) and one or more secondary arms (13) succeeding from the central frame (11) to a free end of the spray boom (10).

11. Spray boom (10) according to claim 9 or claim 10, wherein:
- the first structural element (10.1) of at least one assembly is formed by the central frame (11) and the second structural element (10.2) of the at least one assembly is formed by the or one of the main arms (12);
and/or
- the first structural element (10.1) of at least one assembly is formed by the or one of the main arms (12) and the second structural element (10.2) of the at least one assembly is formed by the secondary arm (13) mounted on said main arm (12);
and/or
the first structural element (10.1) of at least one assembly is formed by one of the secondary arms (13), while the second structural element (10.2) of the at least one assembly is formed by another of the secondary arms (13) that is mounted on one of the secondary arms (13).

12. Agricultural spraying system (100) for an agricultural machine comprising a spray boom (10) according to one of claims 9 to 11.
